# FASCICULE DE BREVET EUROPEEN

(11) **EP 2 939 574 B1**
(45) Date de publication et mention de la délivrance du brevet: **11.09.2019**
(21) Numéro de dépôt: 15165506.5
(22) Date de dépôt: 28.04.2015
(51) Int. Cl.: A47J 27/08

(54) **ENSEMBLE ELECTRONIQUE D'INFORMATION DU FONCTIONNEMENT D'APPAREILS ELECTROMENAGERS**
ELEKTRONISCHE EINHEIT ZUR INFORMATION ÜBER DEN BETRIEB VON ELEKTROHAUSHALTSGERÄTEN
ELECTRONIC ASSEMBLY WITH INFORMATION ON THE OPERATION OF HOUSEHOLD APPLIANCES

(30) Priorité: 30.04.2014 FR 1453972
(43) Date de publication de la demande: 04.11.2015
(73) Titulaire: SEB S.A., 69130 Ecully (FR)
(72) Inventeur: Cartigny, Michel, Pierre, 21310 MIREBEAU (FR); Baraille, Eric, Laurent, 21121 FONTAINE LES DIJON (FR); Decroze, Nicolas, 69007 LYON (FR)
(74) Mandataire: Weber, Jean-François

(56) Documents cités:
- WO-A1-2013/064349
- CN-U- 203 555 552
- FR-A1- 2 940 899

## Description

La présente invention se rapporte au domaine technique général des appareils électroménagers, et de manière préférentielle à des appareils électroménagers domestiques, du genre appareils de cuisson d'aliments sous pression ou friteuses ou cuiseurs à riz, équipés ou susceptibles d'être équipés d'ensembles électroniques d'information concernant le fonctionnement de l'appareil électroménager sur lequel ils sont destinés à être montés en donnant par exemple des informations sur les paramètres de fonctionnement de l'appareil telles que, la température, la pression ou encore la position de certains organes de commande de l'appareil.

La présente invention concerne plus particulièrement un ensemble électronique d'information du fonctionnement d'appareils électroménagers, du genre appareils de cuisson d'aliments sous pression par exemple, cet ensemble étant destiné à fournir à l'utilisateur une information sur le fonctionnement de l'appareil sur lequel il est monté.

Il est déjà connu, par exemple du brevet FR-2 834 193 d'intégrer un ensemble électronique d'information sur un appareil de cuisson sous pression d'aliments, tel qu'un autocuiseur, afin de récupérer des informations sur la température régnant dans l'enceinte de cuisson. À cette fin, l'ensemble électronique est monté et intégré, par exemple de manière amovible, dans un logement de la coque plastique recouvrant le couvercle. L'ensemble électronique est pourvu d'un capteur de température et d'un circuit électronique et logique approprié recevant les informations de température du capteur pour activer un indicateur, par exemple visuel ou sonore dès qu'un seuil de température est atteint. Le logement recevant l'ensemble électronique est disposé à un emplacement précis et de manière appropriée pour que le capteur puisse détecter la température d'un conduit de sortie de vapeur de l'appareil de cuisson et fournir ainsi à l'utilisateur une information sur la température régnant à l'intérieur de l'enceinte de cuisson. Accessoirement, l'ensemble électronique est équipé d'un minuteur permettant de décompter le temps à partir de l'atteinte d'une température de consigne.

Un tel dispositif donne entière satisfaction et permet à l'utilisateur de l'appareil de cuisson sous pression d'obtenir une information très précise et fiable sur l'atteinte d'une température de consigne, et en particulier de la température à partir de laquelle le début de la cuisson doit être effectivement décompté. Ce dispositif permet donc de maîtriser parfaitement le temps de cuisson.

Néanmoins, pour des questions d'esthétique et de conception de certaines pièces spécifiques conduisant à la conception de plusieurs versions différentes d'appareils de cuisson sous pression ayant des fonctions en communs mais différant pour d'autres, les coques plastiques et les logements intégrant un tel ensemble électronique sont de formes différentes selon le type d'autocuiseur de telle sorte que le même ensemble électronique se présente également sous différentes formes pour pouvoir être intégré dans des logements appropriés également de formes différentes.

Cette diversité de formes des ensembles électroniques qui est nécessaire pour s'adapter à différents modèles d'autocuiseur présente l'inconvénient de devoir fabriquer également différents modèles d'ensemble électronique de forme et dimension appropriées dédiées à chaque modèle d'autocuiseur ce qui n'est pas une solution économique optimale.

En outre, les générations récentes d'appareils électroménagers, et en particulier les autocuiseurs, peuvent également être équipées de capteurs de position de la soupape de régulation tel que cela est par exemple décrit dans le brevet FR-2 940 900. L'ensemble électronique qui se présente sous la forme d'un boîtier amovible de dimension réduite est mis en place dans un logement approprié sur l'appareil de cuisson sous pression et grâce à une série de capteurs magnétiques il est capable de détecter la position d'un organe de commande mobile sur lequel est embarqué un autre élément magnétique. L'organe de commande étant relié mécaniquement à la position de la soupape de régulation et réglant ainsi sa position, l'ensemble électronique permet de détecter la position de l'organe de commande et par conséquent la position de la soupape de régulation de pression qui peut occuper plusieurs positions correspondant à des niveaux de pression de régulation différents.

Sur certains modèles d'appareils de cuisson sous pression de vapeur, l'ensemble électronique peut également être équipé d'un capteur de température tel que cela est par exemple décrit dans le brevet FR-2 940 899 en complément des capteurs magnétiques de position de la soupape de régulation.

En définitive, il existe ainsi plusieurs versions différentes d'un ensemble électronique d'information du fonctionnement d'appareils électroménagers, en particulier d'autocuiseurs, ces différentes versions présentant des fonctionnalités également différentes ainsi que des formes et les conformations esthétiques différentes pour pouvoir être adaptées et montées sur des modèles d'autocuiseurs différents.

Cette situation conduit à la nécessité de fabriquer plusieurs versions d'ensemble électronique d'information du fonctionnement des appareils électroménagers, ce qui notamment sur le plan économique et industriel, n'est pas une solution optimale de telle sorte que des améliorations sont souhaitables.

Le document WO-2013/064349 divulgue un dispositif de commande, de régulation et d'utilisation pour un appareil de cuisson qui comprend un dispositif de réglage au moyen duquel au moins deux articles alimentaires différents à cuire peuvent être sélectionnés, une mémoire de données et un capteur pour détecter un paramètre qui influence le processus de cuisson, ainsi qu'un microcontrôleur et/ou un microprocesseur.

La présente invention vise par conséquent à porter remède aux différents inconvénients mentionnés ci-dessus et à proposer un nouvel ensemble électronique d'information du fonctionnement d'appareils électroménagers qui présente un caractère universel en ayant la capacité à pouvoir être monté sur des modèles d'appareils électroménagers différents.

Un autre objet de l'invention vise à proposer un nouvel ensemble électronique d'information du fonctionnement d'appareils électroménagers qui tout en ayant la capacité à pouvoir équiper des modèles différents d'appareils électroménagers, puisse également recevoir une pluralité de capteurs différents.

Un autre objet de l'invention vise également à proposer un nouvel ensemble électronique d'information du fonctionnement d'appareils électroménagers qui soit capable de proposer plusieurs modes de fonctionnement et de détection d'informations relatives au fonctionnement de l'appareil électroménager.

Un autre objet de l'invention vise à proposer un nouvel ensemble électronique d'information du fonctionnement d'appareils électroménagers qui puisse être intégré sur différentes versions et différents types d'appareils électroménagers.

Les objets assignés à l'invention sont atteints à l'aide d'un ensemble électronique d'information du fonctionnement d'appareils électroménagers, du genre appareils de cuisson d'aliments sous pression par exemple, destiné à fournir à l'utilisateur une information sur le fonctionnement d'au moins deux modèles différents d'appareils électroménagers appartenant ou non à la même gamme de produits, mais différant par au moins certaines de leurs caractéristiques techniques et formant ainsi au moins un premier modèle et au moins un second modèle, ledit ensemble comportant :
- une base universelle de connexion destinée à être montée indifféremment sur ledit au moins un premier modèle ou ledit au moins un second modèle, ladite base comportant :
   - au moins un premier capteur destiné à donner une information de fonctionnement dudit premier modèle
   - et au moins un second capteur destiné à donner une information de fonctionnement dudit second modèle,
   - un ensemble électronique de traitement de signaux susceptibles de venir des premier et second capteurs,
- au moins deux modules adaptateurs formant un premier module et un second module lesquels comportent respectivement des premier et second moyens d'assemblage dédiés avec la base universelle de sorte que lorsque le premier module est assemblé sur la base universelle et que cette dernière est montée sur le premier modèle, le premier capteur est relié fonctionnellement au premier modèle et est apte à donner une information sur son fonctionnement et que lorsque le second module est assemblé sur la base universelle de connexion et que cette dernière est montée sur le second modèle, le second capteur est relié fonctionnellement au second modèle et est apte à donner une information sur son fonctionnement.

D'autres particularités et avantages de l'invention apparaîtront et ressortiront plus en détails à la lecture de la description faite ci-après, en référence aux dessins annexés, donnés à titre d'exemples illustratifs et non limitatifs, dans lesquels :
- La figure 1 illustre selon une vue générale en perspective, un appareil électroménager conforme à l'invention, en particulier un autocuiseur, équipé d'un module électronique d'information conforme à l'invention.
- La figure 2 illustre, selon une vue agrandie d'un détail de la figure 1, un ensemble électronique d'information conforme à l'invention représenté schématiquement dans sa zone d'implantation sur le couvercle de l'appareil électroménager de la figure 1.
- La figure 3 illustre un autre modèle d'un appareil électroménager, en particulier un autocuiseur, équipé d'un ensemble électronique d'information conforme à l'invention.
- La figure 4 illustre selon une vue en perspective partielle, un détail de réalisation de la figure 3 montrant selon une vue agrandie et schématique l'implantation d'un ensemble électronique d'information conforme à l'invention sur le couvercle de l'appareil électroménager de la figure 3.
- La figure 5 illustre selon une vue en perspective une base universelle de connexion faisant partie d'un ensemble électronique d'information conforme à l'invention.
- La figure 6 illustre selon une vue générale en perspective un ensemble électronique d'information conforme à l'invention comportant une base universelle de connexion illustrée à la figure 5 sur laquelle est assemblé un premier module adaptateur pour constituer un ensemble électronique d'information du fonctionnement d'appareils électroménagers conforme à l'invention.
- La figure 7 illustre selon une vue générale en perspective, un ensemble électronique d'information conforme à l'invention comportant la base universelle de connexion illustrée à la figure 5 sur laquelle est assemblé un second module adaptateur pour constituer un ensemble électronique d'information du fonctionnement d'appareils électroménagers conforme à l'invention.

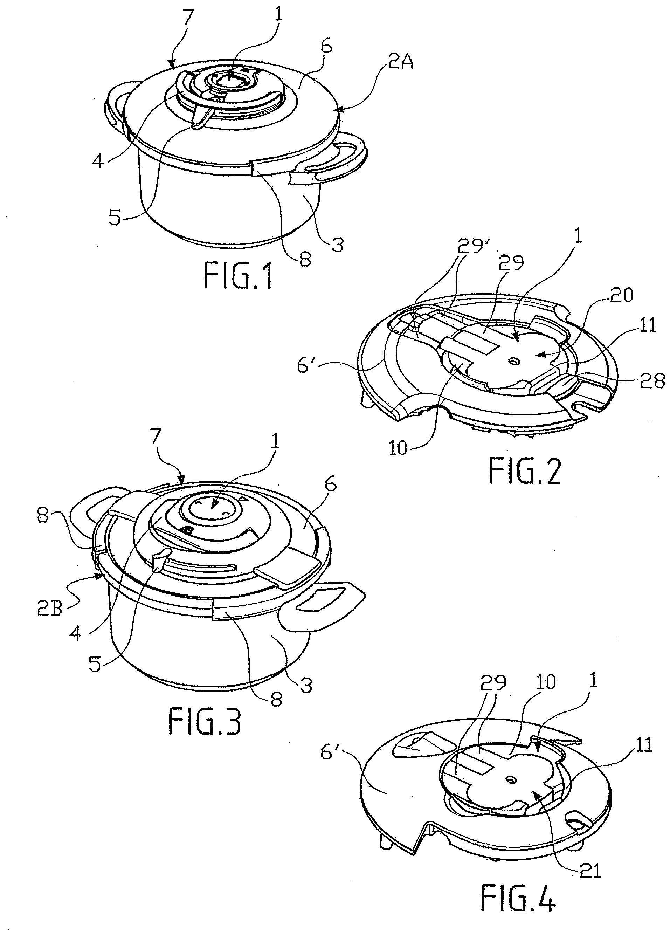

Telle qu'illustrée aux figures, et en particulier aux figures 1 et 3, l'invention trouve son application dans le domaine général des appareils électroménagers, de préférence domestiques, et trouve plus particulièrement son application dans le domaine des appareils électroménagers formés par les gammes d'appareils suivants : les appareils de cuisson d'aliments sous pression de vapeur, tels les autocuiseurs, les cuiseurs vapeur, les cuiseurs à riz, les appareils de friture d'aliments, et plus généralement tous les appareils électroménagers dans lesquels ou au sein desquels il est utile de pouvoir recueillir ou détecter une ou plusieurs informations relatives au fonctionnement du cycle de l'appareil, et par exemple son cycle de cuisson. À titre d'exemple, les informations susceptibles d'être recueillies et/ou détectées peuvent être des informations de température, de pression, de position d'organes, informations qui peuvent ensuite être extrapolées pour en déduire une information finale relative au cycle de l'appareil et à son fonctionnement.

Dans la description qui suit, on fera plus particulièrement référence à un appareil de cuisson d'aliments sous pression de vapeur, cette description étant purement informative et non limitative dans la mesure où l'invention et en particulier l'ensemble électronique d'information constituant l'invention peut être appliqué et monté sur d'autres types d'appareils électroménagers tels que ceux mentionnés ci-dessus.

Tel qu'illustré aux figures 1 et 3 l'appareil de cuisson sous pression est de préférence à usage domestique, tel qu'un autocuiseur comportant au moins une cuve 3 pourvue d'un fond (non représenté) à partir duquel s'élève une paroi latérale se terminant à sa partie supérieure par un rebord de cuve (non représenté). L'appareil de cuisson comporte également un couvercle 7 destiné à être rapporté sur la cuve 3 pour former une enceinte de cuisson étanche.

A titre purement illustratif, l'appareil de cuisson d'aliments sous pression conforme à l'invention peut comporter une cuve 3 de forme sensiblement cylindrique ainsi qu'un couvercle 7 de forme sensiblement circulaire, étant entendu qu'à titre de variante, la cuve 3 et le couvercle 7 peuvent évidemment être de toutes formes géométriques différentes mais complémentaires, et par exemple ovale notamment, sans sortir du cadre de l'invention.

La cuve 3 et l'ossature principale du couvercle 7 sont réalisées, de manière connue, à partir d'un matériau métallique, tel que l'acier inoxydable, la cuve 3 étant pourvue d'un fond (non représenté) apte à diffuser la chaleur. A titre de variante, l'autocuiseur peut être un autocuiseur électrique pourvu de sa propre source d'énergie apte à diffuser de la chaleur, tel une résistance électrique.

L'appareil de cuisson d'aliments sous pression comporte également un ou plusieurs dispositifs de verrouillage/déverrouillage du couvercle 7 sur la cuve 3 permettant à l'utilisateur de verrouiller le couvercle 7 sur la cuve 3 pour assurer la cuisson des aliments à l'intérieur de l'enceinte ou pour déverrouiller l'appareil et avoir ainsi accès à l'intérieur de la cuve 3.

Le dispositif de verrouillage/déverrouillage de l'appareil pourra être formé par tous dispositifs classiques bien connus de l'homme du métier et être par exemple formé d'au moins une et de préférence deux mâchoires de verrouillage 8 montées mobiles sur le couvercle 7 sans que ce nombre soit pour autant limitatif. Bien évidemment, d'autres dispositifs de verrouillage peuvent être employés sans pour autant sortir du cadre de l'invention, et par exemple des systèmes de verrouillage à baïonnettes, à segments traversant, à étrier ou autre. L'autocuiseur comporte également les dispositifs de sécurité requis et par exemple une soupape de sécurité et une soupape de régulation (non représentée) ainsi que des organes de commande et de contrôle 5 de la position de la soupape, du genre manette ou curseur.

Tel qu'illustré aux figures, l'invention concerne un ensemble électronique d'information 1 du fonctionnement d'appareils électroménagers, du genre appareils de cuisson d'aliments sous pression de vapeur par exemple, destiné à fournir à l'utilisateur une information sur le fonctionnement d'au moins deux modèles différents d'appareils électroménagers 2A, 2B appartenant ou non à la même gamme de produits, mais différant par au moins certaines de leurs caractéristiques techniques et formant ainsi au moins un premier modèle 2A et au moins un second modèle 2B. Dans cet exemple précis, les appareils électroménagers 2A, 2B illustrés aux figures 1 et 3 appartiennent à la même gamme, celle des autocuiseurs.

L'ensemble électronique d'information 1 selon l'invention est en effet conçu pour être capable de fournir une information sur le fonctionnement de l'appareil électroménager sur lequel il est monté, étant entendu que l'ensemble électronique d'information 1 selon l'invention peut être monté sur au moins deux modèles différents d'appareils électroménagers tout en étant capable de fournir une information sur le fonctionnement et le déroulement du cycle de l'appareil sur lequel il est monté malgré les différences techniques existantes entre les appareils électroménagers sur lesquels il peut être indifféremment monté.

Au sens de l'invention, deux modèles différents d'appareils électroménagers peuvent appartenir ou non à la même gamme de produits, c'est-à-dire être par exemple deux autocuiseurs mais néanmoins différer par certaines fonctionnalités (par exemple présence ou absence des dispositifs de détection de la position de la soupape de régulation ; présence ou absence des dispositifs de détection de la température régnant à l'intérieur de l'enceinte de cuisson ; présence ou absence de certains dispositifs supplémentaires de sécurité...). Bien évidemment, les modèles différents d'appareils électroménagers au sens de l'invention peuvent également appartenir à des gammes de produits différents c'est-à-dire appartenir, l'un à la gamme des appareils électroménagers, et étant par exemple un autocuiseur, l'autre à la gamme des cuiseurs à riz et étant par exemple un cuiseur vapeur à riz, l'ensemble électronique étant néanmoins conçu et capable d'être monté indifféremment sur l'un ou l'autre de ces deux appareils et pouvant détecter et recueillir une information sur le fonctionnement de l'appareil pour aider et guider l'utilisateur dans la conduite et la maîtrise du cycle de fonctionnement dudit appareil. L'ensemble électronique d'information conforme à l'invention est donc un ensemble électronique d'information présentant un caractère universel puisqu'il peut être monté et relié fonctionnellement à au moins deux modèles différents d'appareils électroménagers et recueillir et traiter des informations sur leur cycle de fonctionnement.

Tel qu'illustré aux figures 1 et 3, l'autocuiseur 2A présente au moins une caractéristique technique différente de celle de l'autocuiseur 2B illustré à la figure 3, ces deux modèles différant par leur esthétique et conformation spécifique des organes de manipulation formés par leur anse de préhension 4, par l'agencement de certains organes de contrôle 5 ainsi que par des fonctionnalités de programmes de cuisson plus complets sur le modèle d'autocuiseur 2A se traduisant notamment par une série de dispositifs et pièces de commande supplémentaires situées sous le capotage externe 6 du couvercle 7. La conjonction de ces différences techniques ainsi que la volonté d'assurer visuellement une esthétique différente entre les deux autocuiseurs induisent pour chaque modèle d'appareils des contraintes de conception en matière de place et de volume disponibles pour incorporer des dispositifs additionnels tels que l'ensemble électronique d'information 1 conforme à l'invention. Il s'ensuit que le volume et la conformation du volume disponible pour incorporer de manière fonctionnelle un ensemble électronique d'information 1 conforme à l'invention est différent selon chaque modèle d'appareils électroménagers, et en particulier selon les autocuiseurs 2A et 2B. Ainsi, l'ensemble électronique d'information du fonctionnement d'appareils ménagers conforme à l'invention comporte :
- une base universelle de connexion 10 destinée à être montée indifféremment sur ledit au moins un premier modèle 2A ou ledit au moins un second modèle 2B, ladite base comportant :
   - au moins un premier capteur destiné à donner une information de fonctionnement dudit premier modèle 2A,
   - et au moins un second capteur destiné à donner une information de fonctionnement dudit second modèle 2B,
- un ensemble électronique de traitement de signaux susceptible de venir des premier et second capteurs.

La base universelle de connexion 10 est donc destinée à être insérée et assemblée de manière à pouvoir être connectée de manière fonctionnelle dans tous les types d'appareils électroménagers comportant un logement 11 adapté à le recevoir de manière fonctionnelle de sorte que les capteurs soient aptes à fonctionner et détecter des informations pour les transmettre à l'ensemble de traitement approprié pour les traiter. L'ensemble électronique d'information du fonctionnement d'appareils électroménagers conforme à l'invention comporte également, en combinaison avec la base universelle de connexion 10, au moins deux modules adaptateur formant un premier module 20 et un second module 21 lesquels comportent respectivement, des premier et second moyens d'assemblage dédiés avec la base universelle de sorte que lorsque le premier module 20 est assemblé sur la base universelle 10 et que cette dernière est montée sur le premier modèle 2A, le premier capteur est relié fonctionnellement au premier modèle 2A et est apte à donner une information sur son fonctionnement et que lorsque le second module 21 est assemblé sur la base universelle de connexion 10 et que cette dernière est montée sur le second modèle 2B, le second capteur est relié fonctionnellement au second modèle 2B et est apte à donner une information sur son fonctionnement.

Les modules adaptateur 20, 21 sont distincts l'un de l'autre en formant des unités séparées qui sont ainsi capables de s'adapter d'une part à chaque appareil électroménager auquel il est spécifiquement dédié, et d'autre part à la base universelle de connexion 10 en activant, par le biais de sa liaison fonctionnelle avec la base universelle de connexion 10 l'ensemble électronique de traitement ainsi que le ou les capteurs dédiés spécifiquement aux modèles d'appareils électroménagers sur lequel il est monté.

Selon l'invention et de préférence, les premier et second capteurs sont des capteurs de température, ou des capteurs de pression ou des capteurs de position, par exemple magnétique.

Selon l'invention, l'ensemble électronique de traitement comprend plusieurs circuits logiques, lesquels sont séparés et dédiés à chaque capteur (le premier ou le second capteur) de sorte que chaque capteur peut être associé à un circuit logique dédié qui est unique.

Les circuits logiques font partie d'un circuit imprimé présent dans le corps même de la base universelle de connexion 10, et par l'intermédiaire de connexions spécifiques telles que des moyens d'activation complémentaires formés par des plots 23 ménagés par exemple à la surface de la base universelle de connexion 10, il est possible d'activer ou de désactiver chacun des circuits logiques indépendants susceptible d'activer le circuit dédié à l'un ou l'autre des capteurs. En d'autres termes, l'assemblage du premier module 20 sur la base universelle de connexion 10 forme un ensemble monobloc et active le circuit logique associé au premier capteur et rend ainsi fonctionnel ledit premier capteur de telle sorte que l'ensemble électronique d'information 1 est à même de fournir l'information que ledit premier capteur est censé donner sur le fonctionnement de l'autocuiseur 2A par exemple.

Le même mode d'action s'applique bien évidemment par analogie au second module 21 lorsqu'il est assemblé sur la base universelle connexion 10.

Chaque module adaptateur 20, 21 est pourvu de moyens d'activation (non représentés aux figures), du genre insert métallique, destinés à activer un seul et unique circuit électronique séparé et dédié, lesdits moyens d'activation étant aptes à venir coopérer avec les moyens d'activation complémentaires, tels que les plots 23, disposés sur la base universelle de connexion 10, lesquels moyens d'activation complémentaires 23 sont reliés au capteur à activer de manière à l'activer.

Telle qu'illustrée aux figures, et à titre d'exemple non limitatif, la base universelle de connexion 10 peut se présenter sous la forme d'une unité ayant un corps plastique assimilable à un disque de faible épaisseur comportant une cavité 24 destinée à recevoir par exemple une pile ainsi qu'une dépression centrale 26 se poursuivant par deux bras sensiblement parallèles 27 au sein desquels les plots 23 des moyens d'activation complémentaires 23 affleurent. Chaque module adaptateur, en particulier le premier module 20 et le second module 21 présente une forme conjuguée à la dépression centrale 26 et au bras 27 de sorte à pouvoir être monté de manière ferme et stable sur la base universelle de connexion 10 pour former un ensemble monobloc par l'intermédiaire d'une contre cavité centrale 26 'et de deux contre-bras 29.

Ainsi, selon l'invention lesdits au moins deux modules adaptateur 20, 21 sont montés de manière amovible sur la base universelle 10, par exemple par clipsage. Avantageusement, chaque module adaptateur, en l'occurrence le premier module 20 et le second module 21 présentent un clip de montage 28 se présentant sous la forme d'un corps en U compressible facilitant le montage stable et amovible sur la base universelle de connexion 10 et dans le logement 11 d'assemblage ménagé par exemple sur l'appareil électroménager (figures 2 et 4) au sein de la partie centrale 6' du capotage externe 6.

Tel qu'illustré, et à titre purement illustratif, chaque module adaptateur, et en l'occurrence le premier module 20 et le second module 21 présentent des contre-bras 29 destinés à être assemblés avec les bras 23 et pourvus des moyens d'activation adaptés aux moyens d'activation complémentaires, en l'occurrence les plots 23, de la base universelle de connexion 10 de manière à activer sélectivement l'un ou l'autre des circuits logiques dédiés à chaque capteur.

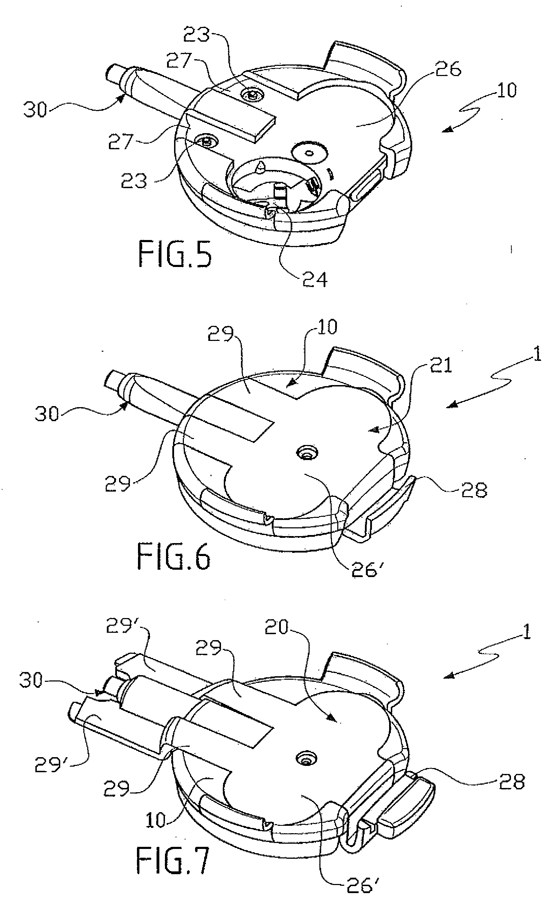

Pour tenir compte du modèle spécifique et dédié sur lequel le second module 21 doit être monté et par exemple de la place et du volume disponible pour assurer son montage et sa connexion fonctionnelle, le second module est pourvu de deux bras supplémentaires 29' (Figure 7) permettant précisément d'adapter la connexion fonctionnelle du second module 21 sur la base universelle de connexion 10 et sur l'autocuiseur concerné.

Selon une version générale de l'invention, l'ensemble électronique d'information 1 est formé d'une part par une base universelle de connexion 10 pourvue d'au moins un capteur de température et d'au moins un capteur de position magnétique et de circuits logiques séparés et dédiés correspondant à chaque capteur, et d'autre part de deux modules adaptateur 20, 21 destinés à être alternativement montés et reliés fonctionnellement de manière amovible sur ladite base, l'un pour activer le circuit logique du capteur de température, l'autre pour activer le circuit logique du capteur magnétique de position.

Ainsi, la base universelle de connexion 1 conforme à l'invention comporte, selon cette variante préférentielle de l'invention, au moins un capteur de température qui est associé à un premier circuit logique destiné à détecter et informer l'utilisateur de la température régnant par exemple dans l'enceinte d'un autocuiseur. Selon cette version avantageuse de l'invention, la base universelle de connexion 10 comporte également au moins un capteur de position magnétique qui est donc lui aussi associé à un circuit logique indépendant permettant à la base universelle de connexion 10, lorsqu'elle est assemblée avec le module adaptateur approprié de détecter la position d'un organe spécifique de l'appareil électroménager sur lequel l'ensemble électronique d'information 1 conforme à l'invention est monté.

Selon cette variante préférentielle de réalisation, ledit au moins un capteur de température est une sonde de température (non représentée aux figures) apte à mesurer l'augmentation de température d'un conduit de sortie de vapeur d'un autocuiseur résultant du passage de la vapeur dans ledit conduit.

À cette fin, et de manière avantageuse, la base universelle de connexion 10 peut être pourvue d'un canal de détection 30 au sein duquel la sonde de température est intégrée et facilitant la détection de la température de la vapeur passant dans le conduit de sortie de l'autocuiseur.

Selon cette version avantageuse de l'invention, ledit au moins un capteur de position magnétique est formé de trois détecteurs magnétiques de position, chaque détecteur étant apte à détecter le niveau de pression spécifique sélectionné d'une soupape de fonctionnement d'un autocuiseur.

Enfin, de manière particulièrement avantageuse, la base universelle de connexion 10 peut comprendre également un bipper, un bouton marche/arrêt et un microcontrôleur gérant les circuits logiques.

De manière optionnelle, la base universelle de connexion 10 comprend également au moins un écran LCD de visualisation tel que cela est visible à la figure 1.

Selon l'invention, lesdits au moins un capteur de température et le capteur de position apprécient le fonctionnement d'au moins deux autocuiseurs de modèle distinct 2A, 2B tels que montrés aux figures.

À titre de variante complémentaire, non illustrée aux figures, il est bien évidemment envisageable que le capteur de température et le capteur de position intégrés dans la base universelle de connexion 10 puissent fournir des informations sur le fonctionnement de deux appareils électroménagers qui n'appartiennent pas à la même gamme, c'est-à-dire qu'ils ne sont pas deux autocuiseurs tels que les deux autocuiseurs 2A et 2B. Le capteur de température pourrait en effet apprécier la température de l'enceinte d'un cuiseur à riz ou de la cuve d'une friteuse, alors que le capteur de position pourrait être capable d'apprécier la position d'une soupape de fonctionnement d'un autocuiseur.

C'est ainsi que de manière générale, l'ensemble électronique d'information 1 conforme à l'invention est destiné à être monté sur des appareils électroménagers appartenant aux gammes de produits suivantes : les appareils de cuisson d'aliments sous pression de vapeur, les cuiseurs vapeur, les cuiseurs à riz, les appareils de friture d'aliments tels que des friteuses à immersion ou à cuisson sèche par exemple. Au sens de l'invention, la notion de « *gamme* » s'entend d'appareils électroménagers assurant la même fonction de transformation des aliments, telle que : friture, cuisson vapeur, cuisson spécifique du riz, les appareils d'une même gamme pouvant néanmoins différer par certaines caractéristiques techniques au sein de ladite gamme.

L'invention concerne par ailleurs un système formé par la combinaison entre un appareil électroménager et un ensemble électronique d'information 1 conforme à l'invention et comportant une base électronique d'information composée d'une base universelle de connexion 10 et d'au moins deux modules adaptateur 20, 21.

L'invention concerne enfin également un appareil électroménager équipé d'une base universelle de connexion 10 et de l'un des premier ou second modules adaptateur 20, 21 tel que décrit précédemment.

Cette solution permet notamment d'adapter un même ensemble électronique d'information 1 sur plusieurs produits différents. Et de réaliser des économies d'échelle en procédant à une sorte de « *mutualisation* » de sous-ensembles électroniques autorisant des gains économique nos négligeables par effet de volumes.

Par ailleurs, il est également possible de faire varier l'aspect esthétique de la coque adaptatrice sur un appareil électroménager a des fins purement esthétiques, lors d'une promotion d'information 1.

Il s'avère également possible d'ajouter une fonctionnalité complémentaire aux modules adaptateurs 20,21 (qui peuvent d'ailleurs être au nombre de trois, quatre ou plus), lesquels présentent alors par exemple une forme saillante spécifique positionnée en vis-à-vis d'un interrupteur, tel un plot 23, présent dans la base universelle de connexion 10. Cette disposition peut permettre de configurer un fonctionnement propre de l'ensemble électronique de d'information 1. Un fonctionnement simple serait du type :
- le module adaptateur 20 active l'interrupteur, en l'occurrence le ou les plots 23 par exemple, et configure le microcontrôleur et par-là même le circuit logique de l'ensemble électronique d'information 1 selon le mode de fonctionnement A,
- le module adaptateur 21 n'active pas l'interrupteur et le circuit logique de l'ensemble électronique de connexion 1 est alors automatiquement configuré selon le mode de fonctionnement B.

L'interrupteur, tel le ou les plots 23, peut être du type électromécanique (micro-switch) classique ou encore du type magnétique.

Le fonctionnement selon le circuit logique conduisant au mode de fonctionnement A ou B active ou inhibe certains capteurs ou actionneurs présents dans la base universelle de connexion 10 en fonction du module adaptateur 20 ou 21 installé et par la même en fonction de l'appareil sur lequel est installé l'ensemble électronique d'information 1.

Il est donc aisé de modifier la logique, la programmation de l'ensemble électronique de connexion 10 en fonction du produit sur lequel est installé cet ensemble.

En pratique, l'utilisateur qui dispose d'un ensemble électronique de connexion 1 composé d'une base universelle de connexion 10 et d'au moins deux modules adaptateurs 20,21 compose lui-même le couple « *base universelle de connexion 10 et un module adaptateur 20 ou 21, par exemple 20* » adapté à l'appareil électroménager qu'il souhaite utiliser et contrôler puis monte l'ensemble électronique d'information 1 ainsi constitué sur l'appareil électroménager approprié. Le cas échéant, l'utilisateur peut posséder un autre appareil électroménager adapté à être contrôlé par le second module adaptateur 21 par exemple et ainsi constituer le couple approprié « *base universelle de connexion 10 et second module adaptateur 21* » lorsque qu'il souhaitera utiliser ce second appareil électroménager. Bien évidemment, l'ensemble électronique d'information 1 conforme à l'invention n'est pas limité à une combinaison entre une base universelle de connexion 10 et deux modules adaptateurs 20, 21, et partant à deux appareils électroménagers différents, mais à nombre supérieur de modules et appareils, et par exemple trois ou quatre, voire plus.

## Revendications

1. Ensemble électronique d'information (1) du fonctionnement d'appareils électroménagers, du genre appareils de cuisson d'aliments sous pression par exemple, destiné à fournir à l'utilisateur une information sur le fonctionnement d'au moins deux modèles différents d'appareils électroménagers appartenant ou non à la même gamme de produits, mais différant par au moins certaines de leurs caractéristiques techniques et formant ainsi au moins un premier modèle (2A) et au moins un second modèle (2B), ledit ensemble comportant :
- une base universelle de connexion (10) destinée à être montée indifféremment sur ledit au moins un premier modèle (2A) ou ledit au moins un second modèle (2B), ladite base comportant :
• au moins un premier capteur destiné à donner une information de fonctionnement dudit premier modèle (2A)
• et au moins un second capteur destiné à donner une information de fonctionnement dudit second modèle (2B),
• un ensemble électronique de traitement de signaux susceptibles de venir des premier et second capteurs,
- au moins deux modules adaptateurs formant un premier module (20) et un second module (21) lesquels comportent respectivement des premier et second moyens d'assemblage dédiés avec la base universelle (10) de sorte que lorsque le premier module (20) est assemblé sur la base universelle (10) et que cette dernière est montée sur le premier modèle (2A), le premier capteur est relié fonctionnellement au premier modèle (2A) et est apte à donner une information sur son fonctionnement et que lorsque le second module est assemblé sur la base universelle de connexion (10) et que cette dernière est montée sur le second modèle (2B), le second capteur est relié fonctionnellement au second modèle (2B) et est apte à donner une information sur son fonctionnement.

2. Ensemble selon la revendication 1 **caractérisé en ce que** les premiers et second capteurs sont des capteurs de température, ou des capteurs de pression ou des capteurs de position, par exemple magnétique.

3. Ensemble selon l'une des revendications 1 ou 2 **caractérisé en ce que** l'ensemble électronique d'information (1) comprend plusieurs circuits logiques, lesquels sont séparés et dédiés à chaque capteur de sorte que chaque capteur peut être associé à un circuit logique dédié unique.

4. Ensemble selon la revendication 3 **caractérisé en ce que** chaque module adaptateur est pourvu de moyens d'activation destinés à activer un seul et unique circuit électronique séparé et dédié, les moyens d'activation étant apte à venir coopérer avec des moyens d'activation complémentaire disposés sur la base universelle (10) et reliés au capteur à activer de manière à l'activer.

5. Ensemble selon l'une des revendications précédentes **caractérisé en ce que** lesdits au moins deux modules adaptateurs (20, 21) sont montés de manière amovible sur la base universelle de connexion (10), par exemple par clipsage.

6. Ensemble selon l'une des revendications précédentes **caractérisé en ce que** qu'il est formé d'une part par une base universelle (10) pourvue d'au moins un capteur de température et d'au moins un capteur de position magnétique et de circuits logiques séparés et dédiés correspondants à chaque capteur, et d'autre part de deux modules adaptateurs (20, 21) destinés à être alternativement montés et reliés fonctionnellement de manière amovible sur ladite base (10), l'un pour activer le circuit logique du capteur de température, l'autre pour activer le circuit logique de l'élément magnétique de position.

7. Ensemble selon la revendication 6 **caractérisé en ce que** ledit au moins un capteur de température est une sonde de température apte à mesurer l'augmentation de température d'un conduit de sortie de vapeur dans un autocuiseur résultant du passage de la vapeur dans ledit conduit.

8. Ensemble selon l'une des revendications 6 ou 7 **caractérisé en ce que** ledit au moins un capteur de position magnétique est formé de trois détecteurs magnétiques de position, chaque détecteur étant apte à détecter un niveau de pression spécifique d'une soupape de fonctionnement d'un autocuiseur.

9. Ensemble selon l'une des revendications précédentes **caractérisé en ce que** la base universelle (10) comprend également un bipper, un bouton marche/arrêt et un microcontrôleur gérant les circuits logiques.

10. Ensemble selon l'une des revendications précédentes **caractérisé en ce que** la base universelle (10) comprend également au moins un écran LCD de visualisation.

11. Ensemble selon l'une des revendications 6 à 10 **caractérisé en ce que** lesdits au moins un capteur de température et capteur de position apprécient le fonctionnement d'au moins deux autocuiseurs de modèle distincts.

12. Ensemble selon l'une des revendications précédentes **caractérisé en ce qu'**il est destiné à être monté sur des appareils électroménagers appartenant aux gammes de produits suivantes : les appareils de cuisson d'aliments sous pression de vapeur, les cuiseurs vapeurs, les cuiseurs à riz, les appareils de friture d'aliments.

13. Système formé par un appareil électroménager et un ensemble conforme à l'une des revendications 1 à 12.

14. Appareil électroménager **caractérisé en ce qu'**il est équipé d'une base universelle de connexion (10) et de l'un des premier ou second module adaptateur (20, 21) conforme à l'une des revendications 1 à 12.

## Patentansprüche

1. Elektronische Einheit (1) zur Information über den Betrieb von Elektrohaushaltsgeräten, zum Beispiel vom Typ Geräte zum Garen von Nahrungsmitteln unter Druck, die dazu bestimmt ist, dem Benutzer eine Information über den Betrieb von mindestens zwei unterschiedlichen Modellen von Elektrohaushaltsgeräten, die zu derselben Produktreihe gehören oder nicht, zu liefern, die sich aber durch mindestens bestimmte ihrer technischen Merkmale unterscheiden und daher mindestens ein erstes Modell (2A) und mindestens ein zweites Modell (2B) bilden, wobei die Einheit Folgendes umfasst:
- eine universelle Anschlussbasis (10), die dazu bestimmt ist, ohne Unterschied auf dem mindestens einen ersten Modell (2A) oder dem mindestens einen zweiten Modell (2B) montiert zu sein, wobei die Basis Folgendes umfasst:
• mindestens einen ersten Fühler, der dazu bestimmt ist, eine Betriebsinformation des ersten Modells (2A) zu geben
• und mindestens einen zweiten Fühler, der dazu bestimmt ist, eine Betriebsinformation des zweiten Modells (2B) zu geben,
• eine elektronische Verarbeitungseinheit von Signalen, die von dem ersten und dem zweiten Fühler kommen können,
- wobei mindestens zwei Adaptermodule ein erstes Modul (20) und ein zweites Modul (21) bilden, die jeweils erste und zweite dedizierte Mittel zum Zusammenfügen mit der universellen Basis (10) umfassen, so dass, wenn das erste Modul (20) mit der universellen Basis (10) zusammengefügt ist und diese Letztere auf das erste Modell (2A) montiert ist, der erste Sensor funktionell mit dem ersten Modell (2A) verbunden und geeignet ist, eine Information über dessen Betrieb zu geben, und dass, wenn das zweite Modul mit der universellen Anschlussbasis (10) zusammengefügt ist und diese Letztere auf das zweite Modell (2B) montiert ist, der zweite Fühler funktionell mit dem zweiten Modell (2B) verbunden und geeignet ist, eine Information über dessen Betrieb zu geben.

2. Einheit nach Anspruch 1, **dadurch gekennzeichnet, dass** der erste und zweite Fühler Temperaturfühler oder Druckfühler oder Positionsfühler sind, die zum Beispiel magnetisch sind.

3. Einheit nach einem der Ansprüche 1 oder 2, **dadurch gekennzeichnet, dass** die elektronische Informationseinheit (1) mehrere Logikschaltungen umfasst, die getrennt und jeweils für einen Fühler derart dediziert sind, dass jeder Fühler mit einer einzigen dedizierten Logikschaltung assoziiert werden kann.

4. Einheit nach Anspruch 3, **dadurch gekennzeichnet, dass** jedes Adaptermodul mit Aktivierungsmitteln versehen ist, die dazu bestimmt sind, eine einzige und alleinige, separate und dedizierte elektronische Schaltung zu aktivieren, wobei die Aktivierungsmittel geeignet sind, mit komplementären Aktivierungsmitteln zusammenzuwirken, die auf der universellen Basis (10) angeordnet und mit dem Fühler, der aktiviert werden soll, verbunden sind, so dass er aktiviert wird.

5. Einheit nach einem der vorstehenden Ansprüche, **dadurch gekennzeichnet, dass** die mindestens zwei Adapter (20, 21) abnehmbar auf der universellen Anschlussbasis (10) zum Beispiel durch Einclipsen montiert sind.

6. Einheit nach einem der vorstehenden Ansprüche, **dadurch gekennzeichnet, dass** sie einerseits aus einer universellen Basis (10) gebildet ist, die mit mindestens einem Temperaturfühler und mindestens einem magnetischen Positionsfühler sowie mit Logikschaltungen, die separat und jedem Fühler entsprechend fest zugeordnet sind, versehen ist, und andererseits mit zwei Adaptermodulen (20, 21), die dazu bestimmt sind, alternativ auf der Basis (10) montiert und funktionell abnehmbar verbunden zu sein, das eine, um die Logikschaltung des Temperaturfühlers zu aktivieren, das andere, um die Logikschaltung des magnetischen Positionselements zu aktivieren.

7. Einheit nach Anspruch 6, **dadurch gekennzeichnet, dass** der mindestens eine Temperaturfühler eine Temperatursonde ist, die geeignet ist, die Temperatursteigerung einer Dampfausgangsleitung in einem Druckkochgerät, die aus dem Durchtritt des Dampfs in der Leitung resultiert, zu messen.

8. Einheit nach einem der Ansprüche 6 oder 7, **dadurch gekennzeichnet, dass** der mindestens eine magnetische Positionsfühler aus drei magnetischen Positionsdetektoren gebildet ist, wobei jeder Detektor geeignet ist, ein spezifisches Druckniveau eines Betriebsventils eines Druckkochgeräts zu erfassen.

9. Einheit nach einem der vorstehenden Ansprüche, **dadurch gekennzeichnet, dass** die universelle Basis (10) auch einen Piepser, einen Ein-/Aus-Knopf und einen Mikrocontroller, der die Logikschaltungen verwaltet, umfasst.

10. Einheit nach einem der vorstehenden Ansprüche, **dadurch gekennzeichnet, dass** die universelle Basis (10) auch mindestens einen LCD-Anzeigebildschirm umfasst.

11. Einheit nach einem der Ansprüche 6 bis 10, **dadurch gekennzeichnet, dass** der mindestens eine Temperaturfühler und Positionsfühler das Funktionieren von mindestens zwei Druckkochgeräten unterschiedlicher Modelle beurteilen.

12. Einheit nach einem der vorstehenden Ansprüche, **dadurch gekennzeichnet, dass** sie dazu bestimmt ist, auf Elektrohaushaltsgeräte montiert zu sein, die zu den folgenden Produktreihen gehören: Geräte zum Garen von Nahrungsmitteln unter Druck, Dampfgarer, Reisgarer, Nahrungsmittelfrittiergeräte.

13. System, das aus einem Elektrohaushaltsgerät und einer Einheit nach einem der Ansprüche 1 bis 12 gebildet ist.

14. Elektrohaushaltsgerät, **dadurch gekennzeichnet, dass** es mit einer universellen Anschlussbasis (10) und einem des ersten oder zweiten Adaptermoduls (20, 21) gemäß einem der Ansprüche 1 bis 12 ausgestattet ist.

## Claims

1. An electronic unit (1) for providing information about the operation of household appliances, such as food pressure cooking appliances for example, intended to provide the user with information about the operation of at least two different models of household appliances belonging or not to the same line of products, but differing by at least certain of their technical characteristics and hence forming at least one first model (2A) and one second model (2B), said unit including:
- a universal connection base (10) intended to be indifferently mounted on said at least one first model (2A) or said at least one second model (2B), said base including:
• at least one first sensor intended to give information about the operation of said first model (2A),
• and at least one second sensor intended to give information about the operation of said second model (2B),
• an electronic unit for processing signals liable to come from the first and second sensors,
- at least two adapter modules forming a first module (20) and a second module (21), which include respectively first and second dedicated means for assembly with the universal base (10) so that, when the first module (20) is assembled to the universal base (10) and the latter is mounted on the first model (2A), the first sensor is functionally connected to the first model (2A) and is adapted to give information about the operation thereof and that, when the second module is assembled to the universal connection base (10) and the latter is mounted on the second model (2B), the second sensor is functionally connected to the second model (2B) and is adapted to give information about the operation thereof.

2. The unit according to claim 1 **characterized in that** the first and second sensors are temperature sensors or pressure sensors or position sensors, for example of the magnetic type.

3. The unit according to one of claims 1 or 2 **characterized in that** the electronic information unit (1) comprises several logical circuits, which are separated and dedicated to each sensor so that each sensor may be associated with a single dedicated logical circuit.

4. The unit according to claim 3 **characterized in that** each adapter module is provided with activation means intended to activate a single and one separated and dedicated electronic circuit, the activation means being adapted to cooperate with complementary activation means arranged on the universal base (10) and connected to the sensor to be activated, so as to activate the latter.

5. The unit according to one of the preceding claims **characterized in that** said at least two adapter modules (20, 21) are removably mounted on the universal connection base (10), for example by clipping.

6. The unit according to one of the preceding claims **characterized in that** it is formed on the one hand by a universal base (10) provided with at least one temperature sensor and at least one magnetic position sensor and separated and dedicated logical sensors corresponding to each sensor, and on the other hand of two adapter modules (20, 21) intended to be alternately removably mounted and functionally connected to said base (10), the one for activating the logical circuit of the temperature sensor, the other to activate the logical circuit of the magnetic position element.

7. The unit according to claim 6 **characterized in that** said at least one temperature sensor is a temperature probe adapted to measure the temperature increase of a steam outlet duct of a pressure cooker resulting from the passage of the steam in said duct.

8. The unit according to one of claims 6 or 7 **characterized in that** said at least one magnetic position sensor is formed of three magnetic position detectors, each detector being adapted to detect a specific level of pressure of an operating valve of a pressure cooker.

9. The unit according to one of the preceding claims **characterized in that** the universal base (10) also comprises a beeper, a On/Off button and a microcontroller managing the logical circuits.

10. The unit according to one of the preceding claims **characterized in that** the universal base (10) also comprises at least one LCD visualisation screen.

11. The unit according to one of claims 6 to 10 **characterized in that** said at least one temperature sensor and position sensor assess the operation of at least two distinct models of pressure cookers.

12. The unit according to one of the preceding claims **characterized in that** it is intended to be mounted on household appliances belonging to the following lines of products: food steam pressure cooking appliances, steam cookers, rice cookers, food frying appliances.

13. A system formed by a household appliance and a unit according to one of claims 1 to 12.

14. An household appliance **characterized in that** it is equipped with a universal connection base (10) and one of the first or second adapter module (20, 21) according to one of claims 1 to 12.
